(19) Europäisches Patentamt / European Patent Office / Office européen des brevets

(11) **EP 4 693 442 A1**

(12) **EUROPEAN PATENT APPLICATION**
published in accordance with Art. 153(4) EPC

(43) Date of publication:
**11.02.2026 Bulletin 2026/07**

(21) Application number: **23929779.9**

(22) Date of filing: **17.08.2023**

(51) International Patent Classification (IPC):
$H01M\ 4/133^{(2010.01)}$    $H01M\ 4/587^{(2010.01)}$
$H01M\ 4/1393^{(2010.01)}$

(52) Cooperative Patent Classification (CPC):
Y02E 60/10

(86) International application number:
**PCT/CN2023/113455**

(87) International publication number:
**WO 2024/198203 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.03.2023 CN 202310322863**

(71) Applicants:
• **AESC Jiangsu Co., Ltd.**
  **Wuxi, Jiangsu 214443 (CN)**
• **AESC HUBEI CO., LTD.**
  **Shiyan, Hubei 442002 (CN)**

• **AESC ORDOS CO., LTD.**
  **Inner Mongolia 017200 (CN)**
• **AESC Shanghai Co., Ltd.**
  **Shanghai 201315 (CN)**

(72) Inventors:
• **LIU, Yongxing**
  **Shanghai 201315 (CN)**
• **SUN, Huayu**
  **Shanghai 201315 (CN)**

(74) Representative: **Becker, Eberhard**
  **Becker Kurig & Partner**
  **Patentanwälte mbB**
  **Bavariastraße 7**
  **80336 München (DE)**

(54) **NEGATIVE ELECTRODE FOR LITHIUM-ION SECONDARY BATTERY, MANUFACTURING METHOD THEREFOR, AND LITHIUM-ION SECONDARY BATTERY COMPRISING SAME**

(57) A negative electrode for a lithium-ion secondary battery and a manufacturing method therefor. The negative electrode for a lithium-ion secondary battery comprises: a negative electrode current collector and a negative electrode active material layer formed on the surface of the negative electrode current collector, wherein the negative electrode active material layer comprises a negative electrode active material; the negative electrode active material comprises amorphous carbon-coated graphite; the porosity P of the negative electrode is 34.0%-55.0%; the specific surface area S of the negative electrode active material is from 0.80 $m^2$/g to 3.20 $m^2$/g; the amorphous carbon coating amount C of the negative electrode active material is 0.80%-3.35%; the graphitization degree G of the negative electrode active material is 83.0%-95.0%; and the particle size D of the negative electrode active material is 3.0-14.0 μm. Also provided are a lithium-ion secondary battery comprising the negative electrode and an electric device. The material level and the electrode sheet level of a negative electrode end are reasonably matched, thereby remarkably improving the power performance of the lithium-ion secondary battery.

EP 4 693 442 A1

## Description

### CROSS-REFERENCE TO RELATED APPLICATION

This patent application claims priority to the China patent application filed on March 29, 2023, with application number 202310322863.X, entitled "Negative electrode for lithium-ion secondary battery, manufacturing method therefor, and lithium-ion secondary battery comprising the same". The entire text of the above application is hereby expressly incorporated herein by reference.

### TECHNICAL FIELD

The present application belongs to the field of lithium-ion secondary batteries, and specifically relates to a negative electrode for a lithium-ion secondary battery, a manufacturing method therefor, and a lithium-ion secondary battery comprising the negative electrode.

### BACKGROUND ART

Lithium-ion secondary batteries have the advantages of high energy density, long cycle life, good low-temperature performance, and green and safety, and therefore are widely used in fields such as power batteries, mobile phones, computers, power tools, wind and solar energy storage.

In particular, plug-in hybrid electric vehicles (PHEV) and hybrid electric vehicles (HEV) may achieve lower fuel consumption and better driving experience, and have received widespread attention. These types of electric vehicles mainly need high power performance and high rate charge and discharge for lithium-ion batteries, making improving the power performance of lithium-ion batteries an urgent issue to be solved in the field of lithium-ion batteries. Therefore, there is a need to develop lithium-ion secondary batteries with better power performance.

Improving the negative electrode end of lithium-ion batteries is a feasible way to improve the power performance of lithium-ion secondary batteries. CN115188920A discloses a negative electrode sheet, wherein the active layer is formed by coatings with different contents of fast-charging materials and conductive agents, so that the fast-charging material may be matched with the conductive agent, the inner side has less fast-charging material and more conductive agent than the outer side, ensuring the lithium ion transmission of the inner coating and at the same time maximizing the energy density of the electrode sheet.

### SUMMARY OF THE INVENTION

At present, the improvement of the negative electrode end generally adopts methods such as reducing the particle size of the active material and surface coating to improve the power performance of the material. In order to further improve the power performance of lithium-ion secondary batteries, the present application reasonably matches the material level and the electrode sheet level to obtain a negative electrode for a lithium-ion secondary battery, thereby remarkably improving the power performance of the lithium-ion secondary battery.

In one aspect, the invention relates to a negative electrode for a lithium-ion secondary battery, including: a negative electrode current collector and a negative electrode active material layer formed on a surface of the negative electrode current collector, wherein the negative electrode active material layer includes a negative electrode active material; the negative electrode active material includes an amorphous carbon-coated graphite; wherein a porosity P of the negative electrode is 34.0%-55.0%; a specific surface area S of the negative electrode active material is 0.80 $m^2/g$-3.20 $m^2/g$; an amorphous carbon coating amount C of the negative electrode active material is 0.80%-3.35%; a graphitization degree G of the negative electrode active material is 83.0%-95.0%; and a particle size D of the negative electrode active material is 3.0 $\mu$m-14.0 $\mu$m.

In one embodiment, the negative electrode further satisfies one or a plurality of following conditions: the porosity P of the negative electrode is 35.0%-53.0%; the specific surface area S of the negative electrode active material is 1.50 $m^2/g$-3.00 $m^2/g$; the amorphous carbon coating amount C of the negative electrode active material is 1.00%-2.50%; the graphitization degree G of the negative electrode active material is 85.0%-93.0%; the particle size D of the negative electrode active material is 5.0 $\mu$m-12.0 $\mu$m.

In one embodiment, the porosity P of the negative electrode and the specific surface area S, the amorphous carbon coating amount C, the graphitization degree G, and the particle size D of the negative electrode active material satisfy a following mathematical formula: $0.020 \leq P \times (S \times C + 2 \times (1-G)/D) \leq 0.030$.

In another aspect, the invention also relates to a manufacturing method for a negative electrode for a lithium-ion secondary battery, including following steps: providing a negative electrode slurry, including: a negative electrode active material and an optional additive; coating the negative electrode slurry on a negative electrode collector and performing a drying treatment to obtain a negative electrode coating sheet; and roll-pressing the negative electrode coating sheet to obtain the negative electrode for the lithium-ion secondary battery.

In still another aspect, the invention also relates to a lithium-ion secondary battery having a power generation element, the power generation element including: the negative electrode for the lithium-ion secondary battery of the invention, a positive electrode, an electrolyte solution, and a separator.

In yet another aspect, the invention also relates to an electric device including the lithium-ion secondary battery of the invention.

## SPECIFIC EMBODIMENTS

General definitions and terminology

Unless otherwise indicated, all publications, patent applications, patents, and other references mentioned herein are incorporated by reference in their entirety.

Unless defined otherwise, all technical and scientific terms used herein have the same meaning as commonly understood by those having ordinary skill in the art to which this invention belongs. In case of conflict, the definitions provided herein shall prevail.

Unless otherwise indicated, all percentages, parts, ratios, etc., are by weight.

When an amount, concentration, or other value or parameter is given as a range, a preferred range or a preferred upper value and lower value or a specific value, it should be understood that all ranges formed from the paired values of any upper range or preferred value and any lower range or preferred value are specifically disclosed, regardless of whether a range is disclosed individually. Unless otherwise indicated, when a numerical range is cited herein, the range is meant to include the endpoints thereof, and all integers and fractions within the range. It is not intended that the scope of the invention be limited to the specific values recited when defining a range. For example, "1-8" encompasses 1, 2, 3, 4, 5, 6, 7, 8 and any sub-range consisting of any two values therein, such as 2-6, 3-5.

The terms "including," "comprising," "having," "containing," or "involving," and other variations thereof herein are inclusive or open-ended and do not exclude additional unrecited elements or method steps. Those skilled in the art will appreciate that the above terms such as "including" encompass the meaning of "consisting of..." The expression "consisting of..." excludes any elements, steps, or ingredients not specified. The expression "consisting essentially of..." means that the scope is limited to the specified elements, steps, or ingredients, plus the optional presence of elements, steps, or ingredients that do not substantially affect the basic and novel characteristics of the claimed subject matter. It should be understood that the expression "containing" encompasses the expressions "consisting essentially of..." and "consisting of..."

The term "selected from..." means that one or a plurality of elements in the group listed later are independently selected and may include combinations of two or more elements.

As used herein, the term "optional" or "optionally" means that the subsequently described event or circumstance may or may not occur, and that the description includes both occurring and not occurring of the event or circumstance.

When values or end-points of a range are described herein, it should be understood that the disclosure includes the specific values or end-points cited.

As used herein, the terms "one or a plurality" or "at least one" refer to one, two, three, four, five, six, seven, eight, nine, or more.

Unless otherwise specified, the terms "combination thereof" and "mixture thereof" refer to a multi-component mixture of each element, such as a two-component mixture, a three-component mixture, a four-component mixture, and the maximum possible multi-component mixture.

In addition, if there is no indication of the number of components or ingredients of the invention, it means that there is no limitation on the number of occurrence (or existence) of the components or ingredients. Therefore, it should be read to include one or at least one and the singular form of components or ingredients also includes the plural unless the number is obviously meant to be singular.

The term "lithium-ion secondary battery" refers to a type of rechargeable battery, wherein lithium ions move from the anode to the cathode during discharge and from the cathode to the anode during charge.

The term "anode" refers to the electrode in a secondary battery at which oxidation occurs during discharge and at which reduction occurs during charge.

The term "cathode" refers to the electrode in a secondary battery at which reduction occurs during discharge and at which oxidation occurs during charge.

The term "formation" refers to the process of charging and discharging the battery with a small current after the battery is obtained during the battery manufacturing process. Formation treatment is beneficial to stabilize the electrical properties of the battery.

The term "electric vehicle" refers to an automobile using electricity as a power source, and examples of the electric vehicle include but are not limited to an electric vehicle (EV), a hybrid electric vehicle (HEV), a plug-in hybrid electric vehicle (PHEV), etc.

Negative electrode

In one aspect, the invention relates to a negative electrode for a lithium-ion secondary battery, including: a negative electrode current collector and a negative electrode active material layer formed on a surface of the negative electrode current collector. The negative electrode refers to the electrode with a lower potential from which electrons flow out of the external circuit during discharge.

Negative electrode current collector

In the invention, there is no particular limitation on the material forming the negative electrode current collector, and for example, a metal may be used. Specifically, the metal that may be selected in this article includes, but is not limited to: aluminum, nickel, iron, stainless steel, titanium, copper, or a combination thereof. When the negative electrode current collector is a combination of two or more metals, an alloy form may be adopted, or a form such as cladding or plating may also be adopted. From the viewpoint of electronic conductivity and battery operating potential, the metal of the negative electrode current collector is preferably copper, aluminum, or stainless steel. In a specific embodiment, the negative electrode current collector is copper foil.

The size of the negative electrode current collector may be adjusted according to the actual use of the battery. For example, if used in a large battery requiring high energy density, a current collector with a large area may be used. The thickness of the negative electrode current collector is not particularly limited, and may be, for example, 1-100 $\mu$m, such as 1 $\mu$m, 5 $\mu$m, 10 $\mu$m, 20 $\mu$m, 50 $\mu$m, 80 $\mu$m, 100 $\mu$m, etc. In a specific embodiment, the thickness of the negative electrode current collector is 10 $\mu$m.

Negative electrode active material layer

The negative electrode active material layer is formed on the surface of the negative electrode current collector, and the shape and the area thereof are not particularly limited. The negative electrode active material layer may cover the surface of one side or two sides of the negative electrode current collector. The thickness of the negative electrode active material layer is not particularly limited, and may be, for example, 1-100 $\mu$m, such as 1 $\mu$m, 5 $\mu$m, 10 $\mu$m, 20 $\mu$m, 50 $\mu$m, 80 $\mu$m, 100 $\mu$m, etc. In a specific embodiment, the thickness of the negative electrode current collector is 10 $\mu$m.

Negative electrode active material

The negative electrode active material layer may include a negative electrode active material. The negative electrode active material is generally a material that may intercalate or deintercalate lithium ions. The negative electrode active material that may be used herein may be a carbon material, including but not limited to an amorphous carbon layer-coated graphite (i.e., graphite having a non-crystalline amorphous carbon layer coated at the surface thereof). In one embodiment, the negative electrode active material is amorphous carbon-coated graphite. The graphite described herein may include natural graphite, artificial graphite, modified graphite, silicon-oxygen composite artificial graphite, or a combination thereof. The negative electrode active material may be in the form of particles, powder, etc., for example, amorphous carbon-coated graphite particles.

The power performance of the lithium-ion battery is related to the transmission of lithium ions in the liquid phase, at the solid-liquid interface, and in the solid phase. By regulating the negative electrode at the material level (such as the specific surface area S of the negative electrode active material, the amorphous carbon coating amount C, the graphitization degree G, and the particle size D) and the electrode sheet level (such as the negative electrode electrode sheet porosity P), the power performance of the battery may be improved.

The transmission of lithium ions in the liquid phase is affected by the porosity of the electrode sheet. Herein, the "porosity of the negative electrode" may also be referred to as the "porosity of the negative electrode electrode sheet". In one embodiment, the porosity P of the negative electrode is 34.0%-55.0%, preferably 35.0%-53.0%, for example, 34.0%, 35.0%, 36.0%, 37.0%, 38.0%, 38.1%, 39.0%, 39.2%, 39.4%, 39.6%, 39.7%, 40.0%, 40.6%, 42.0%, 42.1%, 42.3%, 42.8%, 43.5%, 44.0%, 45.0%, 45.4%, 48.0%, 50.0%, 51.0%, 52.0%, 53.0%, 54.0%, 55.0%, etc. Increasing the porosity of the negative electrode increases the liquid phase transmission pathway and reduces the liquid phase transmission resistance, thereby improving power performance. A negative electrode with a porosity that is too low or too high is not conducive to improving power performance. A porosity that is too low may lead to worse electrolyte solution infiltration, and the electrolyte solution cannot fully enter the electrode sheet, which is not conducive to reducing liquid phase transmission resistance, thereby causing a decrease in the power performance of the lithium-ion battery; a porosity that is too high may affect the full contact between the particles of the negative electrode active material. Worse particle contact may cause a decrease in the electronic conductivity of the negative electrode electrode sheet, thereby causing a decrease in the power performance of the lithium-ion battery.

The term "porosity" as used herein has a meaning commonly understood in the art, for example, refers to the proportion of pores inside a material to the total volume of the apparent volume of a sample (such as a negative electrode electrode sheet). The porosity of the negative electrode may be measured in a conventional manner, for example, according to the national standard GB/T 21650.1-2008/ISO 15901-1:2005, the porosity of the negative electrode electrode sheet may be measured using mercury intrusion porosimetry.

At the solid-liquid interface, the solid-liquid interface transmission process of lithium ions is affected by the interfacial lithium ion transmission channel. The specific surface area S of the negative electrode active material and the amorphous carbon coating amount C affect the solid-liquid interface transmission. The suitable specific surface area S and amorphous carbon coating amount C of the negative electrode active material are helpful to improve the solid-liquid interface transmission process of lithium ions, thereby improving the power performance of the battery.

A suitable specific surface area S of the negative electrode active material helps to increase the interface transmission channel, thereby improving power performance. In one embodiment, the specific surface area S of the negative electrode active material is 0.80 $m^2$/g-3.20 $m^2$/g, preferably 1.50 $m^2$/g-3.00 $m^2$/g, for example, 0.80 $m^2$/g, 0.90 $m^2$/g, 1.00 $m^2$/g, 1.10 $m^2$/g, 1.20 $m^2$/g, 1.30 $m^2$/g, 1.40 $m^2$/g, 1.50 $m^2$/g, 1.60 $m^2$/g, 1.63 $m^2$/g, 1.64 $m^2$/g, 1.76 $m^2$/g, 1.78 $m^2$/g, 1.80 $m^2$/g, 1.82 $m^2$/g, 1.90 $m^2$/g, 1.91 $m^2$/g, 1.96 $m^2$/g, 2.00 $m^2$/g, 2.01 $m^2$/g, 2.03 $m^2$/g, 2.10 $m^2$/g, 2.11 $m^2$/g, 2.12 $m^2$/g, 2.19 $m^2$/g, 2.20 $m^2$/g, 2.21 $m^2$/g, 2.42 $m^2$/g, 2.50 $m^2$/g, 2.53 $m^2$/g, 2.80 $m^2$/g, 3.00 $m^2$/g, 3.10 $m^2$/g, 3.20 $m^2$/g, etc. A specific surface area S of the negative electrode active material that is too large or too small has an adverse effect on the power performance of the battery. If the specific surface area is too large, the dispersion processing effect of the negative electrode active material particles is worse, affecting the full contact between the particles, causing the electronic conductivity of the negative electrode electrode sheet to decrease, and thus leading to a decrease in the power performance of the lithium-ion battery; if the specific surface area is too small, there are fewer interface transmission channels, which is not conducive to the transmission of lithium ions at the solid-liquid interface, thus leading to a decrease in the power performance of the lithium-ion battery.

The "specific surface area" herein has the meaning generally understood by those skilled in the art, that is, the total area per unit mass of a material. The measurement may be performed using a conventional method and equipment in the art, for example, the specific surface area may be measured using a multi-point BET method.

Amorphous carbon materials have a larger interlayer spacing than graphite to improve the diffusion performance of lithium ions therein. Therefore, coating graphite with amorphous carbon is equivalent to forming a lithium ion buffer layer at the outer surface of graphite, thereby improving the large current charge and discharge performance of the graphite material. In addition, coating graphite with amorphous carbon may prevent the exfoliation of graphite layers caused by the co-embedding of solvent molecules, increase the selection range of the electrolyte solution system, and improve the cycle stability of the electrode material.

Suitably increasing the amorphous carbon coating amount C of the negative electrode active material may effectively reduce the charge transfer impedance at the solid-liquid interface, which is beneficial to the transmission of lithium ions at the solid-liquid interface and thus improves power performance. In one embodiment, the amorphous carbon coating amount C of the negative electrode active material is 0.80%-3.35%, preferably 1.00%-2.50%, for example, 0.80%, 0.90%, 1.00%, 1.20%, 1.45%, 1.48%, 1.50%, 1.52%, 1.53%, 1.55%, 1.58%, 1.59%, 1.60%, 1.62%, 1.63%, 1.69%, 1.70%, 1.71%, 1.77%, 1.80%, 1.82%, 1.90%, 1.92%, 2.00%, 2.02%, 2.10%, 2.20%, 2.30%, 2.40%, 2.50%, 2.60%, 2.70%, 2.80%, 2.90%, 3.00%, 3.10%, 3.20%, 3.30%, 3.35%, etc. An amorphous carbon coating amount C of the negative electrode active material that is too high or too low has an adverse effect on the power performance of the battery. If the amorphous carbon coating amount is too high, the dispersion processing effect of the negative electrode active material particles may be affected, which is not conducive to sufficient contact between the particles. The deterioration of particle contact may cause the electronic conductivity of the negative electrode sheet to decrease, and then lead to a decrease in the power performance of the lithium-ion battery. If the amorphous carbon coating amount is too low, the charge transfer impedance at the solid-liquid interface may not be fully improved, and the transmission of lithium ions at the solid-liquid interface is hindered, which may lead to a decrease in the power performance of the lithium-ion battery.

The "amorphous carbon coating amount" herein refers to the ratio of the mass of the coated amorphous carbon layer to the mass of the negative electrode active material in the negative electrode active material. Taking graphite particles coated with amorphous carbon as an example, "amorphous carbon coating amount" refers to the ratio of the mass of the amorphous carbon layer to the mass of the entire graphite particles (including the amorphous carbon layer). The measurement may be performed according to a conventional method and equipment in the art, for example, according to the national standard GB/T 8727-2008, the coking value of the coating agent is determined, and the product of the coking value and the amount of coating agent added is calculated to be the amorphous carbon coating amount.

The solid-phase transmission of lithium ions is affected by the bulk transmission distance and the transmission resistance of the solid phase (such as graphite).

The particle size of the negative electrode active material affects the bulk transmission distance. The suitable particle size of the negative electrode active material helps to improve the power performance of the battery. Suitably reducing the negative electrode active material helps shorten bulk phase transmission distance, reduce transmission resistance, and thus improve power performance. In one embodiment, the particle size D of the negative electrode active material is 3.0 μm-14.0 μm, preferably 5.0 μm-12.0 μm, for example, 3.0 μm, 4.0 μm, 5.0 μm, 6.0 μm, 6.2 μm, 6.6 μm, 6.8 μm, 7.0 μm, 7.3 μm, 7.7 μm, 8.0 μm, 8.1 μm, 8.6 μm, 9.0 μm, 9.3 μm, 10.0 μm, 10.5 μm, 11.0 μm, 11.1 μm, 11.2 μm, 11.5 μm, 12.0 μm, 13.0 μm, 14.0 μm, etc. A particle size of the negative electrode active material that is too large or too small is not conducive to the power performance of the battery. If the particle size of the negative electrode active material is too large, bulk phase transmission distance is increased, transmission resistance is increased, which is not conducive to the solid phase transmission of lithium ions, resulting in the inability to replenish lithium ions in time for lithium insertion, thereby causing the power performance of the lithium-ion battery to deteriorate; if the particle size is too small, the particle dispersion processing effect is worse, affecting the full contact between the particles, which may cause the electronic conductivity of the negative electrode to decrease, thereby causing the power performance of the lithium-ion battery to deteriorate.

In this article, "particle size" refers to the particle size accounting for 50% of the sample volume particle size distribution from small to large, that is, the particle size corresponding to when the cumulative particle size distribution percentage reaches 50%. "Particle size" herein may also be referred to as "D50 particle size". The "particle size" herein may be measured using a conventional method and equipment in the art, such as using a laser particle size analyzer to test the particle size volume distribution.

By suitably reducing the graphitization degree of the negative electrode active material, the interlayer spacing thereof is larger, the solid phase transmission resistance of lithium ions is reduced, and therefore power performance is improved. In one embodiment, the graphitization degree G of the negative electrode active material is 83.0%-95.0%, preferably 85.0%-93.0%, for example 83.0%, 84.0%, 85.0%, 86.0%, 87.0%, 87.2%, 88.0%, 89.0%, 89.2%, 89.6%, 90.0%, 90.3%, 90.5%, 90.9%, 91.0%, 91.2%, 91.7%, 91.8%, 92.0%, 90.2%, 92.4%, 92.7%, 93.0%, 94.0%, 94.4%, 95.0%, etc. A graphitization degree of the negative electrode active material that is too low or too high is not conducive to improving the power performance of the battery. If the graphitization degree of the negative electrode active material is too low, the particle dispersion processing effect is worse, thus affecting the full contact between the particles and is not conducive to power performance, which may cause the electronic conductivity of the negative electrode to decrease, and thus the power performance of the lithium-ion battery to deteriorate. If the graphitization degree is too high, the interlayer spacing is larger, and the solid transmission resistance is greater, which is not conducive to the solid-phase transmission of lithium ions, resulting in the inability to replenish lithium ions in time for lithium insertion, thereby causing the power performance of the lithium-ion battery to deteriorate.

The term "graphitization degree" herein has the meaning generally understood by those skilled in the art, that is, the degree of perfection of the graphite crystal structure, and may also refer to the degree of regularity of the arrangement of carbon atoms in the graphite structure. It may generally be calculated using the graphite 002 crystal plane spacing. The smaller the crystal plane spacing, the higher the graphitization degree. The graphitization degree may be measured according to a conventional method and equipment in the art, for example, referring to the national standard GB/T 24533-2019 and using the graphitization degree equation to calculate the graphitization degree.

Herein, when the negative electrode active material is a coated material, the specific surface area, the graphitization degree, and the particle size of the negative electrode active material respectively correspond to the specific surface area, the graphitization degree, and the particle size of the coated material having the coating layer. For example, graphite is coated with amorphous carbon, and the resulting amorphous carbon-coated graphite is used as the negative electrode active material, and the specific surface area, the graphitization degree, and the particle size of the negative electrode active material refer to the specific surface area, the graphitization degree, and the particle size of the amorphous carbon-coated graphite respectively.

The applicant found that when the porosity, the specific surface area, the amorphous carbon coating amount, the graphitization degree, and the particle size meet a certain range (as described above), the negative electrode may have an optimal material structure and electrode sheet structure, thus helping to improve battery power performance.

In one embodiment, the negative electrode of the invention satisfies the following conditions: the porosity P of the negative electrode is 34.0%-55.0%, the specific surface area S of the negative electrode active material is 0.80 m²/g-3.20 m²/g, the amorphous carbon coating amount C of the negative electrode active material is 0.80%-3.35%, the graphitization degree G of the negative electrode active material is 83.0%-95.0%, and the particle size D of the negative electrode active material is 3.0 μm-14.0 μm. The battery using the negative electrode may have better power performance.

Furthermore, in a preferred embodiment, the negative electrode also satisfies one or a plurality of the following conditions, such as 1, 2, 3, 4, or all of the following, to further improve the power performance of the battery: the porosity P of the negative electrode is 35.0%-53.0%; the specific surface area S of the negative electrode active material is 1.50 m²/g-3.00 m²/g; the amorphous carbon coating amount C of the negative electrode active material is 1.00%-2.50%; the graphitization degree G of the negative electrode active material is 85.0%-93.0%; the particle size D of the negative electrode active material is 5.0 μm to 12.0 μm.

In a more preferred embodiment, the negative electrode of the invention has the following characteristics: the porosity P of the negative electrode is 35.0%-53.0%; the specific surface area S of the negative electrode active material is 1.50 m$^2$/g-3.00 m$^2$/g; the amorphous carbon coating amount C of the negative electrode active material is 1.00%-2.50%; the graphitization degree G of the negative electrode active material is 85.0%-93.0%; the particle size D of the negative electrode active material is 5.0 μm-12.0 μm. This may remarkably improve the power performance of the battery using the negative electrode of the invention.

A suitable content of negative electrode active material in the negative electrode active material layer helps to achieve good power performance of the negative electrode. The weight of the negative electrode active material may be 80% or more of the weight of the negative electrode active material layer, preferably 90% or more, and more preferably 92% or more. In one embodiment, the weight ratio of the negative electrode active material to the negative electrode active material layer may be 0.92-0.97, for example, 0.92, 0.93, 0.94, 0.95, 0.96, 0.97, etc.

Furthermore, the applicant unexpectedly discovered that for the following aspects: electrode sheet factors (including the porosity P affecting the liquid phase transmission process), interface factors (including: the amorphous carbon coating amount C and the graphitization degree G affecting the solid-liquid interface transmission process), internal factors (including: the particle size D and the specific surface area S affecting the solid phase transmission process), when the relevant parameters of these aspects satisfy a specific relationship, the power performance of the battery may be further improved. The negative electrode for the lithium-ion secondary battery of the invention has a porosity P of the negative electrode, an amorphous carbon coating amount C of the negative electrode active material, a graphitization degree G, a particle size D, and a specific surface area S satisfying the following mathematical formula: $0.020 \leq P \times (S \times C + 2 \times (1-G)/D) \leq 0.030$, wherein the unit of the porosity P is "1"; the unit of the specific surface area S is m$^2$/g; the unit of the amorphous carbon coating amount C and the graphitization degree G is "1"; and the unit of the particle size D is micrometer (μm). When the negative electrode satisfies the mathematical formula: $0.020 \leq P \times (S \times C + 2 \times (1-G)/D) \leq 0.030$, the power performance of the lithium-ion secondary battery is better.

As needed, the negative electrode active material layer may further include other additives (such as a conductive agent, a thickener, a binder, etc.) to impart suitable properties to the negative electrode.

Conductive agent

The conductive agent refers to an additive added to improve the conductivity of the negative electrode active material layer. When the negative electrode active material layer contains a conductive agent, an electron network inside the active material layer may be efficiently formed, thus contributing to the power characteristics of the battery. The conductive agent usable herein includes, but is not limited to, conductive carbon black, carbon nanotubes, carbon fibers, acetylene black, Ketjen black, preferably conductive carbon black. These conductive agents may be used alone or in combination of a plurality. In one embodiment, the conductive agent is conductive carbon black. The use of conductive carbon black as a conductive agent in combination with the negative electrode active material of the invention may achieve a good power improvement effect.

In the negative electrode active material layer, a suitable content of the conductive agent helps to fully improve the conductivity of the negative electrode active material layer and avoid adverse effects. In one embodiment, the weight ratio of the conductive agent to the negative electrode active material layer is 0.015-0.025, for example, 0.015, 0.018, 0.02, 0.023, 0.025, etc.

Binder

The binder is used to provide a bonding effect, thus helping to obtain good bonding force inside the negative electrode active material layer and between the negative electrode active material layer and the negative electrode current collector. The binder that may be used herein includes, but is not limited to, a thermoplastic polymer such as polyethylene, polypropylene, polyethylene terephthalate (PET), polyether nitrile, polyacrylonitrile, polyimide, polyamide, cellulose, carboxymethyl cellulose (CMC) and a salt thereof, ethylene-vinyl acetate copolymer, polyvinyl chloride, styrene-butadiene rubber (SBR), isoprene rubber, butadiene rubber, ethylene-propylene rubber, ethylene-propylene-diene copolymer, styrene-butadiene-styrene block copolymer and a hydride thereof, styrene-isoprene-styrene block copolymer and a hydride thereof, fluororesin such as polyvinylidene fluoride (PVDF), polytetrafluoroethylene (PTFE), tetrafluoroethylene-hexafluoropropylene copolymer (FEP), tetrafluoroethylene-perfluoroalkyl vinyl ether copolymer (PFA), ethylene-tetrafluoroethylene copolymer (ETFE), polychlorotrifluoroethylene (PCTFE), ethylene-chlorotrifluoroethylene copolymer (ECTFE), polyvinyl fluoride (PVF), vinylidene fluoride fluororubber such as vinylidene fluoride-hexafluoropropylene-based fluororubber (VDF-HFP-based fluororubber), vinylidene fluoride-hexafluoropropylene-tetrafluoroethylene fluororubber (VDF-HFP-TFE-based fluororubber), vinylidene fluoride-pentafluoropropylene-based fluororubber (VDF-PFP-based fluororubber), vinylidene fluoride-pentafluoropropylene-tetrafluoroethylene-based fluororubber (VDF-PFP-TFE-based fluororubber), vinylidene fluoride-perfluoromethyl vinyl ether-tetrafluoroethylene-based fluororubber (VDF-PFMVE-TFE-based fluororubber), vinylidene fluoride-chlorotrifluoroethylene-based fluororubber (VDF-CTFE-based fluororubber), epoxy resin, etc. These binders may be used alone or in combination of a plurality.

In the negative electrode active material layer, the binder is preferably one that may form an aqueous binder system. The aqueous binder system refers to a system using water as a solvent or a dispersion medium to provide binding effect. The aqueous binder system has high bonding strength and uses water as a solvent or a dispersion medium. The aqueous binder system is inexpensive and environmentally friendly. In addition, since water vapor is generated during drying, the equipment investment in the production line may be remarkably reduced to reduce environmental load. Herein, the binder using water as a dispersion medium includes all types of latex or emulsion, and refers to polymer emulsified with water or suspended in water, such as polymer latex obtained by emulsion polymerization in a self-emulsifying system.

The binder used to form the aqueous binder system includes, but is not limited to, styrene-based polymer (styrene-butadiene rubber, styrene-vinyl acetate copolymer, styrene-acrylic copolymer, etc.), acrylonitrile-butadiene rubber, methyl methacrylate-butadiene rubber, (meth)acrylic polymers (polyethyl acrylate, polyethyl methacrylate, polypropyl acrylate, polymethyl methacrylate (methyl methacrylate rubber), polypropyl methacrylate, polyisopropyl acrylate, polyisopropyl methacrylate, polybutyl acrylate, polybutyl methacrylate, polyhexyl acrylate, polyhexyl methacrylate, polyethylhexyl acrylate, polyethylhexyl methacrylate, polylauryl acrylate, polylauryl methacrylate, etc.), polytetrafluoroethylene, polyethylene, polypropylene, ethylene-propylene copolymer, polybutadiene, butyl rubber, fluororubber, polyethylene oxide, polyepichlorohydrin, polyphosphazene, polyacrylonitrile, polystyrene, ethylene-propylene-diene copolymer, polyvinyl pyridine, chlorosulfonated polyethylene, polyester resin, phenolic resin, epoxy resin.

From the perspective of adhesion, the binder of the invention may include, but is not limited to, a combination of one or a plurality of styrene-butadiene rubber, acrylonitrile-butadiene rubber, methyl methacrylate-butadiene rubber, and methyl methacrylate rubber. In order to obtain better adhesion, the binder may be styrene-butadiene rubber.

In order to provide a good binding effect, the content of the binder should be maintained within a suitable range. In one embodiment, the weight ratio of the binder to the negative electrode active material layer is 0.015-0.025.

Thickener

When a binder for forming an aqueous binder system is used, the binder may be used in combination with a thickener in order to improve coating properties, thus helping to obtain a good coating effect during the manufacturing process.

The thickener may improve the viscosity of the negative electrode slurry, thus helping to improve the coating properties of the slurry. The optional thickener herein includes, but is not limited to: water-soluble polymer such as polyvinyl alcohol (preferably with an average polymerization degree of 200-4000, more preferably 1000-3000, and a saponification degree of 80 mol% or more, more preferably 90 mol% or more) and a modified body thereof (1-80 mol% saponified product in vinyl acetate units of copolymers of ethylene/vinyl acetate=2/98-30/70 mol ratio, 1-50 mol% partial acetal product of polyvinyl alcohol, etc.), starch and a modified body thereof (oxidized starch, phosphated starch, cationized starch, etc.), cellulose derivative (carboxymethyl cellulose, methyl cellulose, hydroxypropyl cellulose, hydroxyethyl cellulose, and a salt thereof, etc.), polyvinyl pyrrolidone, polyacrylic acid (salt), polyethylene glycol, copolymer of (meth)acrylamide and/or (meth)acrylate [(meth)acrylamide polymer, (meth)acrylamide-(meth)acrylate copolymer, (meth)acrylate alkyl (carbon number 1 to 4)ester-(meth)acrylate copolymer, etc.], styrene-maleate copolymer, Mannich-modified polyacrylamide, formaldehyde condensation-type resin (urea-formaldehyde resin, melamine-formaldehyde resin, etc.), polyamide polyamine or dialkylamine-epichlorohydrin copolymer, polyethyleneimine, casein, soy protein, synthetic protein, and galactomannan derivative, etc. These thickeners may be used alone or in combination of a plurality.

The thickener may preferably include: polyvinyl alcohol and a modified body thereof, starch and a modified body thereof, a cellulose derivative (carboxymethyl cellulose, methyl cellulose, hydroxyethyl cellulose, and salt thereof, etc.), polyvinyl pyrrolidone, polyacrylic acid (salt), or polyethylene glycol, or a combination thereof, preferably sodium carboxymethyl cellulose. When styrene-butadiene rubber is used as a binder, the combination of these thickeners and the binder produces good bonding effects. In a preferred embodiment, styrene-butadiene rubber is used as a binder and carboxymethyl cellulose (salt) is used as a thickener. In a more preferred embodiment, styrene-butadiene rubber is used as the binder and sodium carboxymethyl cellulose is used as the thickener.

In the negative electrode active material layer, the weight ratio of the binder to the thickener is not particularly limited. In one embodiment, the weight ratio of the binder to the thickener is 1:0.1-10, more preferably 1:0.2-1, for example 1:0.5. Preferably, the ratio of styrene-butadiene rubber to sodium carboxymethyl cellulose is 1: 0.1-10, more preferably 1: 0.2-1, for example 1: 0.5.

Manufacturing method for negative electrode for lithium-ion secondary battery

In another aspect, the invention also relates to a manufacturing method of a negative electrode for a lithium-ion secondary battery, including the following steps:

> providing a negative electrode slurry, including: a negative electrode active material and an optional additive;
> coating the negative electrode slurry on the negative electrode current collector and then performing a drying treatment to obtain a negative electrode coating sheet;
> roll-pressing the negative electrode coating sheet to obtain a negative electrode for a lithium-ion secondary battery.

In particular, the negative electrode active material and the additive are as described above.

The negative electrode slurry may further include a solvent. The solvent is used to disperse the negative electrode active material and the additive to form a dispersed system. In one embodiment, water is used as the solvent. Using water as the solvent has a series of advantages, such as low price, green and environmental protection, and the subsequent drying process produces water vapor to remarkably reduce equipment investment in the production line and reduce environmental load.

The components of the negative electrode slurry may be mixed to obtain the negative electrode slurry. For example, a negative electrode active material, an additive, and a solvent are mixed to obtain the negative electrode slurry. During the mixing process, the stirring speed of the mixing may be controlled according to actual conditions, for example, 100-2500 rpm, such as 100 rpm, 200 rpm, 500 rpm, 1000 rpm, 1500 rpm, 2000 rpm, 2500 rpm, etc. Adequate mixing and stirring is helpful to obtain a uniformly dispersed negative electrode slurry, which in turn helps to obtain a negative electrode coating sheet having a uniformly distributed coating.

In order to obtain better dispersion effect, the negative electrode active material and the additive (such as a conductive agent, a binder, and a thickener) may be fully mixed first, and then the solvent may be added to help shorten the stirring time of obtaining a uniformly dispersed negative electrode slurry.

The negative electrode slurry may be coated in a conventional manner, and a coating layer may be formed on the entire or a portion of the negative electrode current collector. For example, a method such as: die coating such as slide die coating, comma direct coating, comma reverse coating, gravure coating, gravure reverse coating may be used.

The obtained negative electrode coating sheet is subjected to a drying treatment to remove the volatile phase (such as solvent) in the coating layer, and the remaining components (such as negative electrode active material, additive, etc.) are retained to form the negative electrode coating sheet. Drying may be performed in a conventional manner in the art. In order to improve drying efficiency, heating is usually adopted for drying, such as vacuum drying, infrared heating drying, etc. During the drying process, a suitable drying temperature may speed up drying efficiency and achieve sufficient drying in a shorter time. However, the drying temperature should not be too high to avoid decomposition of the raw materials and to avoid surface unevenness caused by violent volatilization of the solvent. In one embodiment, the drying temperature is 50-70°C, for example, 50°C, 55°C, 60°C, 65°C, or 70°C, etc.

Roll-pressing the negative electrode coating sheet may further compact the negative electrode electrode sheet to achieve a target porosity, thereby obtaining a target negative electrode for a lithium-ion secondary battery. The roll-pressing process may be performed using a method such as, for example, a metal roll, an elastic roll, a heating roll (thermal roll). The temperature during the roll-pressing process may be lower than the temperature at which the coating layer of the active material layer is dried, and the roll-pressing process may be performed at room temperature or under heating conditions, but is preferably performed under heating conditions. Roll-pressing (hot-pressing) under heating conditions may reduce the variation in porosity, which may be because the softening of the binder may be promoted and the pore distribution may be readily uniform.

During the coating process and/or the rolling process, an electric field may be applied to further improve the performance of the negative electrode. An electric field perpendicular to the plane of the current collector may be applied during the coating process and/or the roll-pressing process. Due to the anisotropy of the conductivity of graphite particles, the graphite layers tend to be oriented in the direction perpendicular to the current collector, thereby reducing the orientation degree OI value of the graphite negative electrode sheet, thereby achieving the effect of increasing fast charging, reducing expansion, and improving circulation. The electric field may be applied in the form of a continuous voltage application. During the coating process, the voltage of the applied electric field is 5-10V, for example: 5V, 6V, 7V, 8V, 9V or 10V, etc. During the roll-pressing process, the voltage of the applied electric field may be 10-20V, such as 10V, 12V, 15V, 18V or 20V, etc.

Lithium-ion secondary battery

In yet another aspect, the invention also relates to a lithium-ion secondary battery having a power generation element. The power generation element includes: the negative electrode for the lithium-ion secondary battery described herein, a positive electrode, an electrolyte solution, and a separator.

Positive electrode

The positive electrode refers to the electrode with a higher potential into which electrons flow from the external circuit during discharge. There is no particular limitation on the positive electrode herein. As an example, the positive electrode may include: a positive electrode current collector and a positive electrode active material layer formed on the surface of the positive electrode current collector.

The positive electrode active material layer may include a positive electrode active material. The positive electrode active material that may be used herein may be a compound containing one or more selected from iron, cobalt, manganese, and nickel, and lithium. The positive electrode active material may be a single lithium-containing compound or a mixture of a plurality of lithium-containing compounds. In one embodiment, the positive electrode active material includes lithium iron phosphate ($LiFePO_4$).

The positive electrode active material layer may further include an additive such as a conductive agent, a binder, and the like. There are no particular limitations on other additives, and for example, may be those described above for use in the negative electrode.

In one embodiment, the conductive agent used in the positive electrode active material layer includes conductive carbon black and carbon nanotubes. In another embodiment, the binder used in the positive electrode active material layer includes polyvinylidene fluoride (PVDF).

Separator

The separator has a function of retaining an electrolyte to ensure lithium ion conductivity between the positive electrode and the negative electrode, and a function of serving as a partition wall between the positive electrode and the negative electrode. The separator may be in the form of a porous sheet separator formed of a polymer and/or fiber, a nonwoven fabric separator, etc.

The separator of the porous sheet formed of a polymer and/or fiber may be microporous (microporous membrane). Specifically, it may be a microporous (microporous membrane) separator formed by the following substances: polyolefin such as polyethylene (PE) and polypropylene (PP); a laminate obtained by laminating multiple layers of the above polyolefin (for example, a laminate with a three-layer structure of PP/PE/PP, etc.), polyimide, aramid, hydrocarbon-based resin such as polyvinylidene fluoride-hexafluoropropylene (PVDF-HFP), glass fiber, etc. The thickness of the separator of the porous sheet is not particularly limited. The non-woven fabric separator may be made of a currently known substance such as cotton, rayon, acetate, nylon, polyester, polyolefin (such as PP, PE, etc.), polyimide, aramid, etc., alone or in combination. The volume density of the nonwoven fabric is not particularly limited as long as sufficient battery characteristics may be obtained by the impregnated electrolyte. Therefore, the thickness of the nonwoven fabric separator only needs to be the same as that of the electrolyte layer. In a preferred embodiment, the separator is a 9 $\mu$m polyethylene separator coated at two sides with a ceramic coating having a thickness of 2 $\mu$m.

Electrolyte solution

The electrolyte solution is used to transport ions and conduct current between the positive and negative electrodes. There is no particular limitation on the electrolyte solution herein. A liquid electrolyte or a gel polymer electrolyte may be used.

The liquid electrolyte has the function of serving as a carrier for lithium ions. The liquid electrolyte may include: a solvent (e.g., an organic solvent, which may serve as a plasticizer), a lithium salt as a supporting salt dissolved in the solvent, and other optional additives. The organic solvent available in the liquid electrolyte includes, but is not limited to, carbonate such as ethylene carbonate (EC), ethyl methyl carbonate (EMC), propylene carbonate (PC), dimethyl carbonate (DMC), and diethyl carbonate (DEC), preferably a mixed solvent of ethylene carbonate (EC), ethyl methyl carbonate (EMC), and diethyl carbonate (DEC). Lithium salt that may be used in the electrolyte solution includes, but is not limited to: compounds that may be added to the active material layer of the electrode, such as $Li(CF_3SO_2)_2N$, $Li(C_2F_5SO_2)_2N$, $LiPF_6$, $LiBF_4$, $LiClO_4$, $LiAsF_6$, $LiTaF_6$, $LiCF_3SO_3$, preferably $LiPF_6$. In a preferred embodiment, the electrolyte solution is a liquid electrolyte including: ethylene carbonate (EC), ethyl methyl carbonate (EMC), diethyl carbonate (DEC), and $LiPF_6$.

By using a gel polymer electrolyte, the distance between electrodes may be stabilized, the occurrence of polarization may be suppressed, and durability (cycle characteristics) may be improved. The gel polymer electrolyte may be obtained by injecting the above liquid electrolyte into a matrix polymer (main polymer) including an ion conductive polymer. When a gel polymer electrolyte is used as the electrolyte, the electrolyte no longer has fluidity and readily blocks the ion conductivity between the layers. The ion-conductive polymer of the matrix polymer (main polymer) includes, but is not limited to, polyethylene oxide (PEO), polypropylene oxide (PPO), polyethylene glycol (PEG), polyacrylonitrile (PAN), polyvinylidene fluoride-hexafluoropropylene (PVDF-HEP), poly(methyl methacrylate) (PMMA), and copolymer thereof, etc. The matrix polymer of the gel electrolyte may exhibit excellent mechanical strength by forming a cross-linked structure. In order to form a cross-linked structure, a polymerizable polymer (such as PEO or PPO) for forming a polymer electrolyte may be subjected to a polymerization treatment such as thermal polymerization, ultraviolet polymerization, radiation polymerization, or electron beam polymerization using a suitable polymerization initiator.

Manufacture of lithium-ion secondary battery

The lithium-ion secondary battery of the invention may be manufactured in a conventional manner. As an example, the positive electrode, the separator, the negative electrode, and the electrolyte solution may be assembled in sequence, so that the positive electrode, the separator, the negative electrode, and the separator are combined alternately, and a soft-pack battery is obtained via formation.

Power performance of lithium-ion secondary battery

The power performance of the lithium-ion secondary battery may be evaluated using room-temperature DC resistance (DCR) and low-temperature DC resistance (DCR) of the battery. The smaller the room-temperature DCR and the low-temperature DCR values of the battery, the better the power performance of the battery. The room-temperature DCR and the low-temperature DCR may be measured as follows: in a constant temperature environment of 25°C, the lithium-ion battery state of charge SOC is adjusted to 50%, the lithium-ion battery is left for 1 hour, and the voltage $V_0$ after the end of the leave is recorded. Discharge is performed at a rate of 10C (current of $I_0$) for 10 seconds, the voltage $V_1$ after the discharge is recorded, and $(V_1-V_0)/I_0$ is recorded as the room temperature DCR; in a constant temperature environment of 25°C, the lithium-ion battery state of charge SOC is adjusted to 50%, the temperature is adjusted to -20°C, the lithium-ion battery is left for 3 hours, and the voltage $V_2$ after the end of the leave is recorded. Discharge is performed at a rate of 4C (current $I_1$) for 10 seconds, the voltage $V_3$ after the end of the discharge is recorded, and $(V_3-V_2)/I_1$ is recorded as the low-temperature DCR. In one embodiment, the room-temperature direct current resistance (DCR) of the lithium-ion secondary battery of the invention is 65 m$\Omega$ or less, preferably 62 m$\Omega$ or less, more preferably 60 m$\Omega$ or less, more preferably 57 m$\Omega$ or less, and most preferably 50 m$\Omega$ or less. In one embodiment, the low-temperature direct current resistance (DCR) of the lithium-ion secondary battery of the invention is 630 m$\Omega$ or less, preferably 600 m$\Omega$ or less, more preferably 550 m$\Omega$ or less, and most preferably 520 m$\Omega$ or less.

Electric device

In yet another aspect, the invention also relates to an electric device including the lithium-ion secondary battery of the invention. The electric device includes, but is not limited to, an electric car, an electric two-wheeled vehicle, a power storage system, or a combination thereof. The electric vehicle includes, but is not limited to, a plug-in hybrid electric vehicle, a hybrid electric vehicle, or a combination thereof.

**Beneficial effects**

The invention starts from the negative end of the lithium-ion secondary battery, reasonably matches the material level and the electrode layer level, and specifically finely controls the negative electrode porosity, the specific surface area S of the negative electrode active material, the amorphous carbon coating amount C, the graphitization degree G, and the particle size D, thereby remarkably improving the power performance of the lithium-ion secondary battery. Furthermore, the inventors found that when each parameter in the negative electrode satisfies the following mathematical formula I: $0.020 \leq P \times (S \times C + 2 \times (1-G)/D) \leq 0.030$, the power performance of the lithium-ion secondary battery may be further improved.

**Examples**

The solution of the invention is further described in detail below in conjunction with specific embodiments.

It should be noted that the following embodiments are merely examples for clearly illustrating the technical solutions of the invention, and are not intended to limit the invention. For those of ordinary skill in the art, other different forms of changes or modifications may be made based on the above description. It is not necessary and impossible to list all the implementation methods here, and the remarkable changes or modifications derived therefrom are still within the scope of protection of the invention. Unless otherwise specified, the instruments, equipment, and reagents and materials used herein are all commercially available or may be manufactured by conventional means in the art.

Manufacture

1. Manufacture of positive electrode sheet

The positive electrode active material: $LiFePO_4$ lithium iron phosphate, the conductive agent: conductive carbon black (Super P), carbon nanotubes (CNT), and the binder: polyvinylidene fluoride (PVDF) were mixed in a mass ratio of 94:3:1:2, and the solvent: N-methylpyrrolidone (NMP) was added and stirred to mix evenly to obtain a positive electrode slurry; the positive electrode slurry was evenly coated on a 16 $\mu$m aluminum foil current collector. After processes such as drying, roll-pressing, and cutting, the positive electrode sheet was manufactured.

2. Manufacture of negative electrode sheet

The negative electrode active material: graphite coated or not coated with amorphous carbon (the specific surface area S, the amorphous carbon coating amount C, the graphitization degree G, and the particle size D of the graphite coated or not coated with amorphous carbon used in the examples and comparative examples are shown in Table 1), the conductive agent: conductive carbon black (Super P), the thickener: sodium carboxymethyl cellulose (CMC), and the binder: styrene-butadiene rubber (SBR) were mixed in a mass ratio of 95:2:1:2, and then the solvent: deionized water was added, and the mixture was stirred to be uniformly mixed to obtain a negative electrode slurry; the negative electrode slurry was evenly coated on a 10 $\mu$m copper foil current collector and dried. The electrode sheet was roll-pressed to a certain porosity P (the porosities of the negative electrodes of the examples and the comparative examples are shown in Table 1), and then subjected to processes such as cutting to obtain a negative electrode sheet.

3. Manufacture of electrolyte solution

Ethylene carbonate (EC), ethyl methyl carbonate (EMC), and diethyl carbonate (DEC) were uniformly mixed in a volume ratio of 1:1:1, and then dry high-purity lithium salt $LiPF_6$ was dissolved in the above mixed solvent to manufacture an electrolyte solution with a concentration of 1 mol/L.

4. Manufacture of separator

The separator was a 9 $\mu$m polyethylene separator coated at two sides with a ceramic coating having a thickness of 2 $\mu$m.

5. Manufacture of lithium-ion secondary battery

The manufactured positive electrode sheet, separator, negative electrode sheet, and electrolyte solution were assembled in sequence, so that the positive electrode sheet, the separator, the negative electrode sheet, and the separator were combined alternately, and the soft-pack lithium-ion secondary batteries of Examples 1-23 and Comparative examples 1-5 with a capacity of 1 Ah were obtained via formation.

Table 1

| | Interface factor | | Internal factor | | Electrode sheet factor | Mathematical formula I |
|---|---|---|---|---|---|---|
| | Specific surface area S ($m^2/g$) | Amorphous carbon coating amount C | Graphitization degree G | Particle size D ($\mu$m) | Electrode sheet porosity P | $P \times (S \times C + 2 \times (1-G)/D)$ |
| Comparative example 1 | 1.51 | 0.00% | 92.1% | 15.2 | 31.4% | 0.0033 |
| Comparative example 2 | 1.48 | 0.00% | 94.0% | 11.1 | 29.5% | 0.0032 |
| Comparative example 3 | 1.82 | 0.00% | 93.2% | 10.2 | 35.6% | 0.0047 |
| Comparative example 4 | 1.20 | 0.80% | 94.0% | 13.3 | 26.3% | 0.0049 |
| Comparative example 5 | 1.00 | 1.09% | 95.1% | 16.4 | 28.8% | 0.0049 |
| Example 1 | 0.80 | 1.52% | 92.4% | 8.1 | 42.1% | 0.0130 |
| Example 2 | 3.20 | 1.55% | 91.7% | 7.3 | 42.8% | 0.0310 |
| Example 3 | 1.78 | 0.80% | 94.4% | 6.2 | 40.6% | 0.0131 |

(continued)

| | Interface factor | | Internal factor | | Electrode sheet factor | Mathematical formula I |
|---|---|---|---|---|---|---|
| | Specific surface area S (m²/g) | Amorphous carbon coating amount C | Graphitization degree G | Particle size D (μm) | Electrode sheet porosity P | $P \times (S \times C + 2 \times (1-G)/D)$ |
| Example 4 | 1.63 | 3.35% | 90.5% | 6.6 | 38.1% | 0.0318 |
| Example 5 | 1.82 | 1.58% | 83.0% | 6.8 | 39.4% | 0.0310 |
| Example 6 | 2.01 | 1.62% | 95.0% | 6.8 | 39.2% | 0.0185 |
| Example 7 | 2.42 | 1.48% | 92.4% | 3.0 | 42.3% | 0.0366 |
| Example 8 | 2.19 | 1.45% | 92.7% | 14.0 | 42.1% | 0.0178 |
| Example 9 | 1.96 | 1.63% | 90.3% | 6.2 | 55.0% | 0.0348 |
| Example 10 | 1.76 | 1.71% | 91.2% | 6.8 | 34.0% | 0.0190 |
| Example 11 | 1.50 | 1.90% | 90.0% | 11.2 | 37.0% | 0.0172 |
| Example 12 | 3.00 | 1.82% | 87.2% | 9.3 | 38.0% | 0.0312 |
| Example 13 | 1.60 | 1.62% | 89.6% | 10.5 | 35.0% | 0.0160 |
| Example 14 | 2.53 | 1.59% | 89.2% | 11.1 | 53.0% | 0.0316 |
| Example 15 | 1.91 | 1.00% | 90.2% | 10.0 | 39.7% | 0.0154 |
| Example 16 | 1.64 | 2.50% | 91.8% | 8.6 | 52.0% | 0.0312 |
| Example 17 | 2.11 | 1.92% | 85.0% | 9.0 | 45.4% | 0.0335 |
| Example 18 | 1.90 | 1.69% | 93.0% | 11.5 | 43.5% | 0.0193 |
| Example 19 | 2.21 | 2.30% | 91.0% | 5.0 | 36.0% | 0.0313 |
| Example 20 | 2.10 | 1.53% | 90.9% | 12.0 | 39.6% | 0.0187 |
| Example 21 | 2.12 | 1.77% | 87.2% | 7.7 | 44.0% | 0.0311 |
| Example 22 | 2.03 | 1.52% | 92.4% | 6.2 | 42.1% | 0.0233 |
| Example 23 | 1.60 | 2.02% | 86.0% | 8.6 | 44.0% | 0.0285 |

Test

The lithium-ion secondary battery of the invention may be tested by the following method, and the test results are shown in Table 2:

1. Specific surface area test method

2 g of negative electrode active material (i.e., graphite coated or not coated with amorphous carbon) was placed in a 9 mm ball sample tube and degassed at 200°C for 2 hours. The specific surface area of the sample was determined using the multi-point BET method ($P/P_0$ was 0.05, 0.10, 0.15, 0.20, 0.25, and 0.30), and the adsorbate was nitrogen gas.

2. Particle size test method

To 50 mg of negative electrode active material (i.e., graphite coated or not coated with amorphous carbon), 5 drops of 1% by mass ethylphenyl polyethylene glycol aqueous solution and 20 mL of deionized water were added and fully dispersed evenly, and the particle size volume distribution was tested using a laser particle size analyzer. The particle refractive index was 2.68, the solvent refractive index was 1.33, and the shading degree was 5-10%. The particle size accounting for 50% of the volume particle size distribution from small to large is the particle size of the material.

3. Amorphous carbon coating amount test method

Taking the negative electrode active material (i.e., amorphous carbon-coated graphite) as the sample, the coking value of the coating agent was determined with reference to the national standard GB/T 8727-2008, and the product of the coking value and the amount of coating agent added was calculated, which was the amorphous carbon coating amount.

4. Graphitization degree test method

Referring to the national standard GB/T 24533-2019, 0.15 g of silicon powder and 0.35 g of negative electrode active material (i.e., graphite coated or not coated with amorphous carbon) were weighed and ground thoroughly in an agate mortar for 10 min, and then placed in a sample holder and flattened. The sample was scanned using an X-ray diffractometer under the conditions of 25°-30° and a step size of 0.02°. The graphite 002 peak was corrected using the silicon 111 peak to obtain the 002 peak $2\theta$ value, and the 002 interlayer spacing was calculated via the Bragg equation. The graphitization degree was calculated using the graphitization degree equation.

5. Electrode sheet porosity test method

With reference to the national standard GB/T 21650.1-2008/ISO 15901-1:2005, the porosity of the negative electrode electrode sheet was determined using the mercury intrusion method.

6. Test methods of DC resistance (DCR) at room temperature and DC resistance (DCR) at low temperature

In a constant temperature environment of 25°C, the lithium-ion battery state of charge SOC was adjusted to 50%, the lithium-ion battery was left for 1 hour, and the voltage $V_0$ after the end of the leave was recorded. Discharge was performed at a rate of 10C (current of $I_0$) for 10 seconds, the voltage $V_1$ after the discharge was recorded, and $(V_1-V_0)/I_0$ was recorded as the room temperature DCR; in a constant temperature environment of 25°C, the lithium-ion battery state of charge SOC was adjusted to 50%, the temperature was adjusted to -20°C, the lithium-ion battery was left for 3 hours, and the voltage $V_2$ after the end of the leave was recorded. Discharge was performed at a rate of 4C (current $I_1$) for 10 seconds, the voltage $V_3$ after the end of the discharge was recorded, and $(V_3-V_2)/I_1$ was recorded as the low-temperature DCR.

Table 2

|  | Room temperature DCR (m$\Omega$) | Low temperature DCR (m$\Omega$) |
|---|---|---|
| Comparative example 1 | 68.9 | 679 |
| Comparative example 2 | 66.4 | 685 |
| Comparative example 3 | 67.5 | 654 |
| Comparative example 4 | 65.3 | 636 |
| Comparative example 5 | 61.2 | 648 |
| Example 1 | 59.3 | 603 |
| Example 2 | 60.9 | 594 |
| Example 3 | 61.3 | 599 |
| Example 4 | 59.2 | 586 |
| Example 5 | 59.5 | 612 |
| Example 6 | 59.2 | 623 |
| Example 7 | 59.4 | 593 |
| Example 8 | 60.8 | 588 |
| Example 9 | 59.7 | 592 |
| Example 10 | 61.2 | 591 |
| Example 11 | 55.2 | 558 |
| Example 12 | 56.1 | 549 |

(continued)

|  | Room temperature DCR (mΩ) | Low temperature DCR (mΩ) |
|---|---|---|
| Example 13 | 55.8 | 559 |
| Example 14 | 54.5 | 561 |
| Example 15 | 56.2 | 556 |
| Example 16 | 55.3 | 559 |
| Example 17 | 56.0 | 563 |
| Example 18 | 56.0 | 560 |
| Example 19 | 55.8 | 552 |
| Example 20 | 56.2 | 559 |
| Example 21 | 51.3 | 532 |
| Example 22 | 48.6 | 511 |
| Example 23 | 49.2 | 518 |

Room-temperature DC resistance (DCR) and low-temperature DC resistance (DCR) are parameters of evaluating battery power performance. The lower the room-temperature DCR and low-temperature DCR values, the better the power performance of the battery.

In Comparative example 1, amorphous carbon was not used to coat the graphite, and the particle size of the graphite was too high and the electrode porosity P was too low. The room-temperature DCR and the low-temperature DCR of the lithium-ion secondary battery thereof were higher, and the power performance was poor.

In Comparative example 2, amorphous carbon was not used to coat the graphite, the electrode sheet porosity P was too low, and the power performance of the battery was worse.

In Comparative example 3, graphite not coated with amorphous carbon was used, and the room-temperature DCR and the low-temperature DCR of the lithium-ion secondary battery thereof were higher, and the power performance was poor.

In Comparative example 4, amorphous carbon-coated graphite was used, but the electrode sheet porosity P was too low, and the room-temperature DCR and the low-temperature DCR of the lithium-ion secondary battery thereof were still worse.

Comparative example 5 also adopted amorphous carbon-coated graphite, but the graphitization degree of the amorphous carbon-coated graphite was slightly high, the particle size D was too high, and the electrode porosity P was too low, so the room-temperature DCR and the low-temperature DCR of the lithium-ion secondary battery thereof were not ideal.

In Examples 1-10, the amorphous carbon coating amount C, the graphitization degree G, the specific surface area S, the particle size D, and the electrode sheet porosity P of the amorphous carbon-coated graphite were all more suitable, the room-temperature DCR and the low-temperature DCR values of the lithium-ion secondary battery thereof were reduced, and the power performance of the battery was improved.

In Examples 11-20, the amorphous carbon coating amount C, the graphitization degree G, the specific surface area S, the particle size D, and the electrode sheet porosity P of the amorphous carbon-coated graphite were all more suitable. From the test results, it may be seen that the room-temperature DCR and the low-temperature DCR of the lithium-ion secondary battery were further reduced, and the power performance was better.

In Example 21, the amorphous carbon coating amount C, the graphitization degree G, the specific surface area S, the particle size D, and the electrode sheet porosity P of the amorphous carbon-coated graphite were all very suitable, but these parameters did not satisfy the mathematical formula: $0.020 \leq P \times (S \times C + 2 \times (1-G)/D) \leq 0.030$. The lithium-ion secondary battery had smaller room-temperature DCR and low-temperature DCR and had good power performance.

In Examples 22 and 23, not only did the amorphous carbon coating amount C, the graphitization degree G, the specific surface area S, the particle size D, and the electrode sheet porosity P of the amorphous carbon-coated graphite all had very suitable values, but these parameters further satisfied the mathematical formula: $0.020 \leq P \times (S \times C + 2 \times (1-G)/D) \leq 0.030$. Compared with Example 21, the room-temperature DCR and the low-temperature DCR of Examples 22 and 23 were further reduced, and the power performance thereof was very excellent.

The above descriptions are only specific examples of the invention, and do not limit the patent scope of the invention. Any equivalent transformation made by using the invention, or directly or indirectly applied in other related technical fields, is also included in the patent protection scope of the invention.

**Claims**

1. A negative electrode for a lithium-ion secondary battery, comprising: a negative electrode current collector and a negative electrode active material layer formed on a surface of the negative electrode current collector, wherein,

   the negative electrode active material layer comprises a negative electrode active material;
   the negative electrode active material comprises: an amorphous carbon-coated graphite;
   wherein,
   a porosity P of the negative electrode is 34.0%-55.0%;
   a specific surface area S of the negative electrode active material is 0.80 $m^2$/g-3.20 $m^2$/g;
   an amorphous carbon coating amount C of the negative electrode active material is 0.80%-3.35%;
   a graphitization degree G of the negative electrode active material is 83.0%-95.0%;
   a particle size D of the negative electrode active material is 3.0 $\mu$m-14.0 $\mu$m.

2. The negative electrode for the lithium-ion secondary battery of claim 1, wherein,
   wherein the negative electrode further satisfies one or a plurality of following conditions:

   the porosity P of the negative electrode is 35.0%-53.0%;
   the specific surface area S of the negative electrode active material is 1.50 $m^2$/g-3.00 $m^2$/g;
   the amorphous carbon coating amount C of the negative electrode active material is 1.00%-2.50%;
   the graphitization degree G of the negative electrode active material is 85.0%-93.0%;
   the particle size D of the negative electrode active material is 5.0 $\mu$m-12.0 $\mu$m.

3. The negative electrode for the lithium-ion secondary battery of claim 1, wherein,
   the porosity P of the negative electrode, the specific surface area S, the amorphous carbon coating amount C, the graphitization degree G, and the particle size D of the negative electrode active material satisfy a following mathematical formula:

$$0.020 \leq P \times (S \times C + 2 \times (1-G)/D) \leq 0.030.$$

4. The negative electrode for the lithium-ion secondary battery of claim 1, wherein,
   the graphite comprises: a natural graphite, an artificial graphite, a modified graphite, a silicon-oxygen composite artificial graphite, or a combination thereof.

5. The negative electrode for the lithium-ion secondary battery of claim 1, wherein,
   a weight ratio of the negative electrode active material to the negative electrode active material layer is 0.92-0.97.

6. The negative electrode for the lithium-ion secondary battery of claim 1, wherein,

   the negative electrode active material layer further comprises an additive,
   the additive comprises: a conductive agent, a binder, a thickener, or a combination thereof;

      wherein,
      the conductive agent comprises: conductive carbon black, carbon nanotube, carbon fiber, acetylene black, Ketjen black, or a combination thereof;
      the binder comprises: styrene-butadiene rubber, acrylonitrile-butadiene rubber, methyl methacrylate-butadiene rubber, methyl methacrylate rubber, or a combination thereof;
      the thickener comprises: polyvinyl alcohol and a modified product thereof, starch and a modified product thereof, cellulose derivative, polyvinyl pyrrolidone, polyacrylic acid (salt), polyethylene glycol, or a combination thereof.

7. The negative electrode for the lithium-ion secondary battery in any of claims 1-6, wherein,
   the negative electrode current collector comprises: a copper current collector, an aluminum current collector, a nickel current collector, an iron current collector, or a combination thereof.

8. A manufacturing method for the negative electrode for the lithium-ion secondary battery in any of claims 1-7, comprising following steps:

providing a negative electrode slurry, comprising: a negative electrode active material and an optional additive;
coating the negative electrode slurry on the negative electrode current collector and then performing a drying treatment to obtain a negative electrode coating sheet;
roll-pressing the negative electrode coating sheet to obtain the negative electrode for the lithium-ion secondary battery.

9. A lithium-ion secondary battery, having a power generation element, the power generation element comprising:

the negative electrode for the lithium-ion secondary battery in any of claims 1-7;
a positive electrode;
an electrolyte solution; and
a separator.

10. An electric device, comprising the lithium-ion secondary battery of claim 9.

## INTERNATIONAL SEARCH REPORT

International application No.

**PCT/CN2023/113455**

**A. CLASSIFICATION OF SUBJECT MATTER**

H01M4/133(2010.01)i; H01M4/587(2010.01)i; H01M4/1393(2010.01)i

According to International Patent Classification (IPC) or to both national classification and IPC

**B. FIELDS SEARCHED**

Minimum documentation searched (classification system followed by classification symbols)

IPC: H01M4/-

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 包覆, 比表面积, 覆膜, 负极, 壳, 孔隙率, 粒度, 粒径, 石墨, 碳, 直径, graphite, cathode, coat+, surface, cladding layer, wrap+, shell, core, surface area, porosity, particle size

**C. DOCUMENTS CONSIDERED TO BE RELEVANT**

| Category* | Citation of document, with indication, where appropriate, of the relevant passages | Relevant to claim No. |
|---|---|---|
| PX | CN 116093257 A (ENVISION AESC TECHNOLOGY (JIANGSU) CO., LTD. et al.) 09 May 2023 (2023-05-09)<br>entire description | 1-10 |
| X | CN 114223073 A (NINGDE CONTEMPORARY AMPEREX TECHNOLOGY CO., LTD.) 22 March 2022 (2022-03-22)<br>description, paragraphs [0005]-[0149] and [0157]-[0172] | 1-10 |
| A | CN 103107335 A (SAMSUNG SDI CO., LTD.) 15 May 2013 (2013-05-15)<br>entire description | 1-10 |
| A | CN 102299307 A (SHENZHEN BTR NEW ENERGY MATERIALS CO., LTD.) 28 December 2011 (2011-12-28)<br>entire description | 1-10 |
| A | US 2016211512 A1 (TOYOTA JIDOSHOKKI KK.) 21 July 2016 (2016-07-21)<br>entire description | 1-10 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **28 November 2023** | **04 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/113455**

| Patent document cited in search report | | | Publication date (day/month/year) | Patent family member(s) | | | Publication date (day/month/year) |
|---|---|---|---|---|---|---|---|
| CN | 116093257 | A | 09 May 2023 | None | | | |
| CN | 114223073 | A | 22 March 2022 | None | | | |
| CN | 103107335 | A | 15 May 2013 | KR | 20130037090 | A | 15 April 2013 |
| | | | | KR | 101708360 | B1 | 21 February 2017 |
| | | | | JP | 2013084601 | A | 09 May 2013 |
| | | | | JP | 6207143 | B2 | 04 October 2017 |
| | | | | US | 2013089784 | A1 | 11 April 2013 |
| | | | | EP | 2579365 | A1 | 10 April 2013 |
| | | | | EP | 2579365 | B1 | 28 November 2018 |
| CN | 102299307 | A | 28 December 2011 | JP | 2013542559 | A | 21 November 2013 |
| | | | | JP | 5509458 | B2 | 04 June 2014 |
| | | | | WO | 2013029211 | A1 | 07 March 2013 |
| | | | | KR | 20130046423 | A | 07 May 2013 |
| | | | | KR | 101439068 | B1 | 05 September 2014 |
| US | 2016211512 | A1 | 21 July 2016 | WO | 2015045259 | A1 | 02 April 2015 |
| | | | | JP | 2015064936 | A | 09 April 2015 |
| | | | | JP | 5806271 | B2 | 10 November 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310322863 X
- CN 115188920 A
- GB 87272008 T
- GB 245332019 T
- GB 2165012008 T